# FASCICULE DE BREVET EUROPEEN

(11) **EP 1 223 842 B1**
(45) Date de publication et mention de la délivrance du brevet: **18.02.2004**
(21) Numéro de dépôt: 00974576.1
(22) Date de dépôt: 27.10.2000
(51) Int. Cl.: A47J 43/07

(54) **SUPPORT DE RANGEMENT D'ACCESSOIRES POUR UN APPAREIL ELECTROMENAGER DE PREPARATION CULINAIRE**
HALTER ZUM AUFBEWAHREN VON ZUBEHÖR FÜR EIN HAUSHALTSGERÄT ZUR NAHRUNGSZUBEREITUNG
SUPPORT FOR STORING ACCESSORIES FOR A HOUSEHOLD APPLIANCE FOR PREPARING FOOD

(30) Priorité: 28.10.1999 FR 9913758
(43) Date de publication de la demande: 24.07.2002
(73) Titulaire: SEB S.A., 69130 Ecully (FR)
(72) Inventeur: SMIT, Robert, F-65290 Louey (FR); CHARLES, Patrick, F-65290 Louey (FR); JURADO, Manuel, F-64140 Lons (FR); ASTEGNO, Jean Paul, F-64420 Espoey (FR); LALLEMAND, Thomas, F-65100 Lourdes (FR); PEYRAS, Lionel, F-65100 Jarret (FR)
(74) Mandataire: Kiehl, Hubert
(86) Numéro de dépôt international: PCT/FR2000/002994
(87) Numéro de publication internationale: WO 2001/030222

(56) Documents cités:
- EP-A- 0 669 095
- WO-A-98/11810
- US-A- 3 758 183
- US-A- 4 334 724
- US-A- 4 856 718

## Description

La présente invention concerne le domaine technique général des appareils électroménagers de préparation culinaire et se rapporte plus particulièrement au rangement des accessoires de ces appareils.

Il est connu du document EP 0 669 095 de réaliser un appareil électroménager de préparation culinaire comportant un boîtier dans lequel est monté un moteur électrique susceptible d'entraîner un disque pour râper ou émincer monté dans un logement fermé par un couvercle. Un tiroir de rangement pour deux disques superposés est disposé sous le moteur. L'appareil décrit dans ce document ne comporte pas d'autres outils de travail.

Pour ranger plusieurs types différents d'outils de travail il a été proposé dans les documents US 4 733 827 et US-A-4 334 724 de réaliser un boîtier fermé par un couvercle articulé au moyen de charnières. Toutefois ce boîtier présente une hauteur importante et ne peut être associé à un appareil électroménager de préparation culinaire sans poser de problèmes d'encombrement.

Le document WO 98/11810 propose un dispositif pour ranger des outils de travail d'un appareil électroménager de préparation culinaire multifonctions. Ce dispositif comporte un support de réception des outils prévu pour être placé dans le récipient de travail. Toutefois cette disposition implique de sortir le support du récipient de travail pour utiliser l'appareil.

L'objet de la présente invention est de proposer un rangement pour les accessoires d'un appareil électroménager de préparation culinaire, dont l'encombrement soit limité.

Un autre objet de la présente invention est de proposer un rangement pour les accessoires d'un appareil électroménager de préparation culinaire, dont la manipulation soit facilitée.

Un autre objet de la présente invention est de proposer un rangement pour les accessoires d'un appareil électroménager de préparation culinaire, facilitant le rangement desdits accessoires.

Un autre objet de la présente invention est de proposer un rangement pour les accessoires d'un appareil électroménager de préparation culinaire, pouvant être associé à un appareil électroménager de préparation culinaire sans gêner l'utilisation dudit appareil.

Ces objets sont atteints avec un support de rangement d'accessoires d'appareil électroménager de préparation culinaire multifonctions selon les caractéristiques de la revendication 1.

Cette disposition permet faciliter le rangement des accessoires sur le support. La hauteur des outils ainsi que le diamètre du moyeu peuvent être limités, ce qui permet de réduire l'encombrement des outils placés sur le support. Du fait que le support s'inscrit dans un plan, un mouvement de translation, selon une direction parallèle audit plan, ou un mouvement de rotation, selon une direction perpendiculaire audit plan, peuvent être envisagés.

Avantageusement, pour simplifier la réalisation du support, le support est formé par un fond dans lequel la ou les zones et la ou les conformations sont obtenues par moulage.

Avantageusement, pour faciliter le positionnement de l'outil correspondant, la ou au moins l'une des zones est annulaire et comporte en son centre un bossage présentant un pictogramme représentant l'outil correspondant.

Avantageusement, des empreintes sont ménagées dans la ou l'une des zones ou entre deux zones ou conformations. Cette disposition permet de superposer partiellement plusieurs outils ou de disposer le moyeu partiellement au dessus d'un outil. Il en résulte une limitation de la surface du support.

Avantageusement, la ou l'une des zones est sensiblement circulaire et comporte un axe prévu pour recevoir au moins un outil en forme de disque. La superposition de plusieurs disques permet un gain de place. Le bord du support peut alors présenter un arrondi prévu pour s'inscrire autour de la périphérie du ou des disques.

Avantageusement la ou les conformations sont prévues pour loger le moyeu entre un bord latéral du support et l'une au moins des zones. Cette disposition permet de limiter la longueur du support en utilisant mieux l'espace disponible. Le moyeu peut notamment être logé le long d'un bord rectiligne du support.

Ces objets sont également atteints avec un tiroir comportant un support selon l'invention, le support étant amovible ou non du tiroir, le tiroir comportant également une face arrière reliée à des faces latérales par des arrondis. Cette disposition facilite l'insertion du tiroir dans un logement lorsque le tiroir coulissant dans ledit logement est totalement extractible.

Avantageusement alors, les arrondis entourent une moitié de la zone sensiblement circulaire du support, au milieu de laquelle est disposé un axe prévu pour recevoir au moins un outil en forme de disque. Cette disposition permet encore un gain de place, les disques venant s'inscrire dans le demi cercle des arrondis.

Ces objets sont également atteints avec un appareil électroménager de préparation culinaire multifonctions selon les caractéristiques de la revendication 9.

Avantageusement, le tiroir est monté coulissant dans le logement et comporte une face arrière reliée à des faces latérales par des arrondis, une telle disposition facilitant la réinsertion du tiroir dans le logement, le retrait complet du tiroir facilitant le nettoyage.

Avantageusement, le logement occupe au moins 70% de la surface de base du boîtier. En utilisant au maximum la surface de base du boîtier, cette disposition permet de limiter la hauteur de l'appareil.

L'invention sera mieux comprise à l'étude de deux exemples de réalisation et de variantes, pris à titre nullement limitatif, illustrés dans les figures annexées, dans lesquelles :
- la figure 1 est une vue d'un appareil électroménager de préparation culinaire comportant un tiroir de rangement présentant un support selon l'invention, dans lequel sont disposés les accessoires,
- la figure 2 est une vue éclatée du tiroir et des accessoires montrés à la figure 1,
- la figure 3 est une vue de dessus du tiroir montré aux figures 1 et 2, sans les accessoires.
- la figure 4 est une vue schématique d'un socle pour être disposé sous un appareil électroménager de préparation culinaire, ce socle formant un espace de rangement comportant un tiroir semblable au tiroir des figures 1 à 3,
- la figure 5 est une vue schématique d'un socle selon un deuxième exemple de réalisation, formant un espace de rangement comportant une base surmontée d'un couvercle,
- la figure 6 est une vue montrant la face supérieure du couvercle illustré à la figure 5.
- les figures 7 et 8 sont des vues montrant la face supérieure du couvercle illustré à la figure 5, respectivement sans accessoires et avec accessoires.
- la figure 9 est une vue montrant la face supérieure de la base illustrée à la figure 5, les accessoires correspondant étant représentés en éclaté,
- la figure 10 est une vues montrant la face inférieure de la base illustrée à la figure 5.

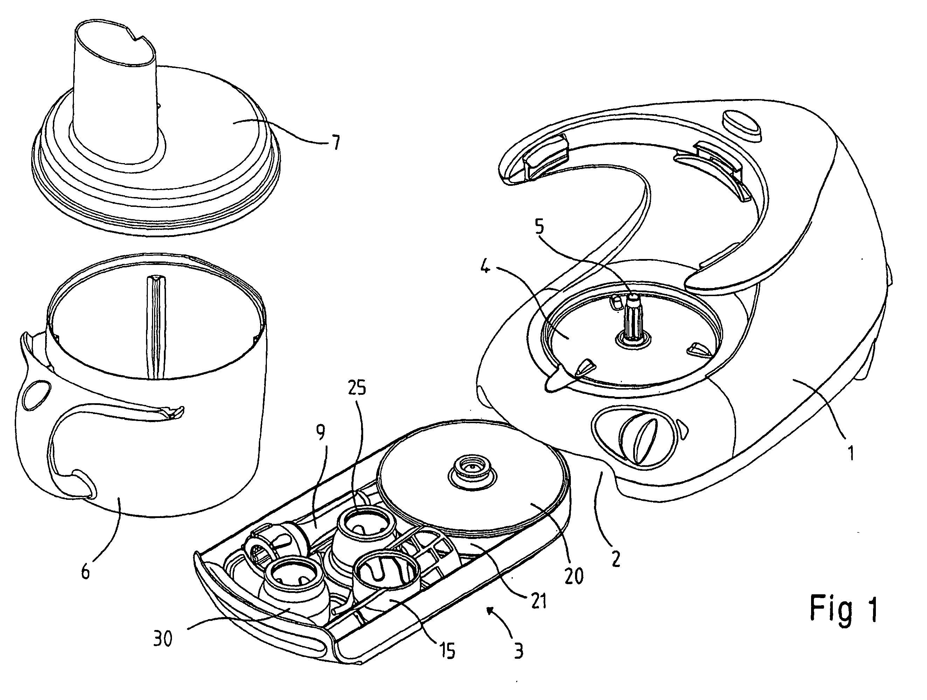

La figure 1 montre un appareil électroménager de préparation culinaire multifonctions comportant un boîtier 1 présentant dans sa partie inférieure un logement 2 prévu pour recevoir un tiroir 3 de rangement d'accessoires. Tel que représenté à la figure 1, le tiroir 3 est monté coulissant dans le logement 2. A titre de variante, non représentée aux figures, le tiroir peut être monté pivotant dans le logement du boîtier. Le logement 2 occupe au moins 70% de la surface de base du boîtier 1. Le boîtier 1 forme un socle 4 muni d'un axe entraîneur 5. Un récipient de travail 6 fermé par un couvercle 7 peut être placé sur le socle 4.

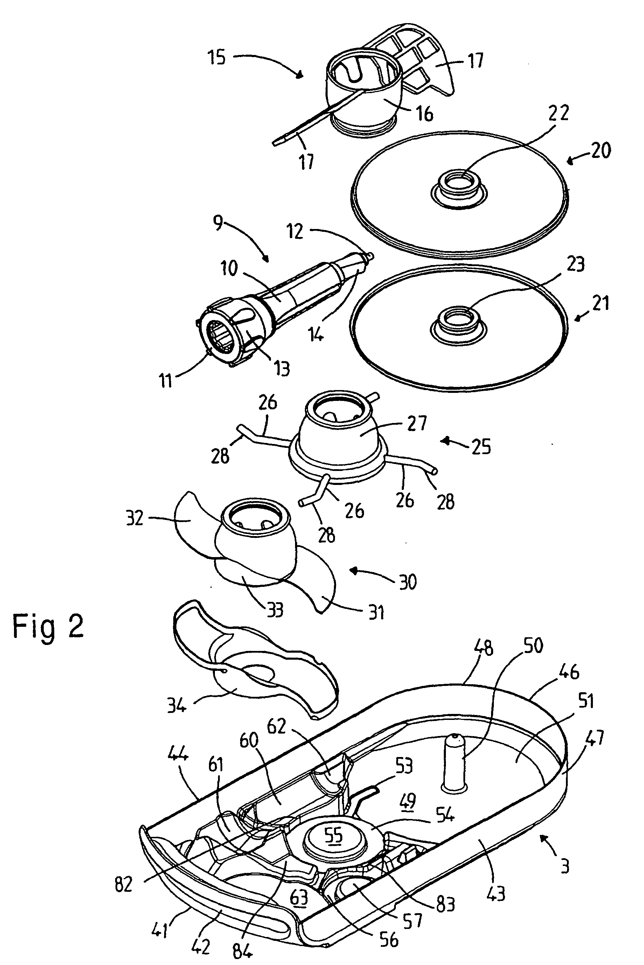

Les accessoires, montrés à la figure 2, comprennent plusieurs outils de travail rotatifs susceptibles d'être montés de manière amovible sur un moyeu 9. Le moyeu 9 peut être mis en place dans le récipient 6 et comporte une extrémité inférieure 11 prévue pour être couplée à une tête d'entraînement, non montrée aux figures, disposée au fond du récipient 6. La tête d'entraînement assure un passage étanche avec le fond du récipient 6 et est couplée à l'axe entraîneur 5 lorsque le récipient 6 est disposé sur le socle. Le moyeu 9 comporte une extrémité supérieure 12 prévue pour venir tourillonner dans un palier, non montré aux figures, ménagé sur la face intérieure du couvercle 7. Le moyeu 9 comporte une base 13 dentée prévue pour le montage d'une première série d'outils de travail rotatifs, reliée par un corps 10 à une tête 14 comportant des cannelures hélicoïdales prévues pour le montage d'une deuxième série d'outils de travail rotatifs.

Les outils de travail rotatifs de la première série comprennent un fouet à émulsionner 15, un pétrin 25, un couteau hachoir 30. Le fouet 15 comporte une couronne 16 prévue pour être montée sur la base 13. La couronne 16 porte deux pales 17 opposées ajourées montées avec un angle d'environ 45°. Le pétrin 25 comporte quatre branches 26 régulièrement réparties sur une couronne 27 prévue pour être montée sur la base 13. Les branches 26 comportent des extrémités libres 28 recourbées. Le couteau 30 comporte une lame inférieure horizontale 31 et une lame supérieure horizontale 32 solidaires d'une couronne 33 prévue pour être montée sur la base 13. Le couteau 30 peut être disposé sur un protège lames 34 de forme adaptée aux lames 31, 32.

Les outils de travail rotatifs de la deuxième série comprennent deux disques pour râper ou émincer 20, 21, Les disques 20, 21 comprennent une ouverture centrale 22, 23 prévue pour le montage sur la partie supérieure 12 du moyeu 9. Les disques 20, 21 comportent des découpes, non montrées à la figure 2, adaptées à la forme et au calibre des préparations à réaliser.

Le tiroir 3 comporte une face avant 41 présentant un moyen de préhension 42, deux faces latérales 43, 44, une face arrière 46 raccordée par un arrondi 47, 48 à chacune des faces latérales, ainsi qu'un fond 49. Le fond 49 forme un support de réception des accessoires. A cet effet, le fond présente des zones de réception délimitées au moins partiellement par des nervures ou des bossages, et des conformations concaves, prévues pour recevoir les différents outils de travail 15, 20, 21, 25, 30 ainsi que le moyeu 9. Les conformations et les zones de réception sont obtenues par moulage de la paroi du fond 49 du tiroir 3. A titre de variante, le support peut être formé par un fond amovible disposé dans le tiroir 3.

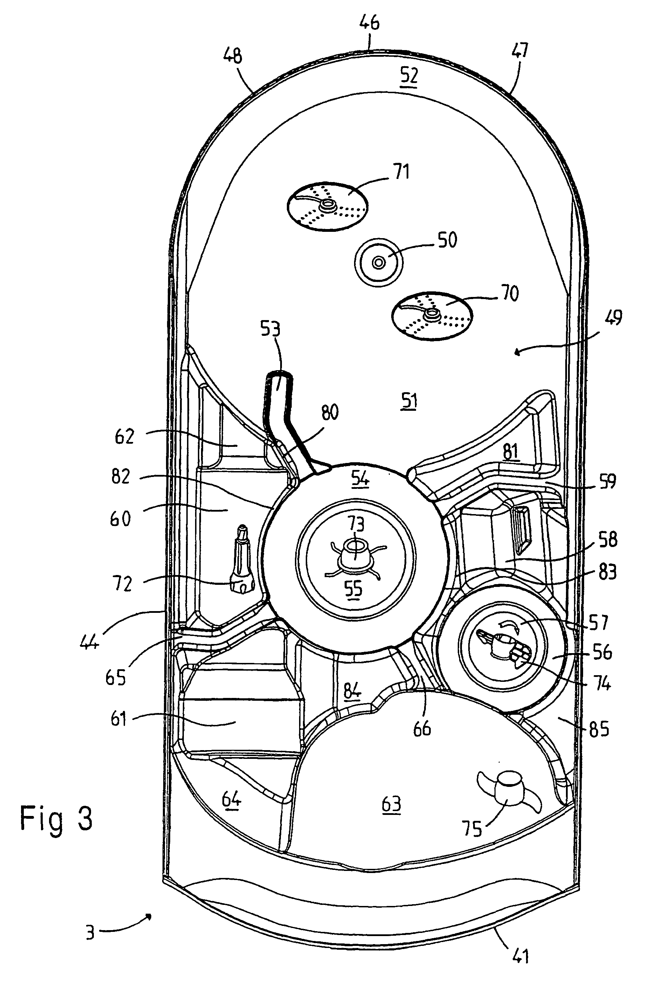

Tel que montré aux figures 2 et 3, le fond 49 présente un axe 50 prévu pour recevoir empilés les deux disques 20, 21, disposé au milieu d'une zone déprimée 51 sensiblement plane. La zone 51 est disposée à proximité de la face arrière 46 et est raccordée par un rebord incliné 52 aux arrondis 47, 48. Les arrondis 47, 48 entourent une moitié de la zone 51. Une empreinte 53 prévue pour loger l'une des branches 26 du pétrin 25 est ménagée en bordure de la zone 51. La zone 51 est partiellement délimitée du côté opposé aux arrondis 47, 48 par une nervure 80 et un bossage 81.

Une zone déprimée annulaire 54 plane et contiguë à la zone 51 est prévue pour recevoir la couronne 28 du pétrin 25. Un bossage 55 est ménagé au milieu de la zone 54. La zone 54 est partiellement délimitée par deux nervures 82, 83 et un bossage 84.

Une deuxième zone déprimée annulaire plane 56 sensiblement contiguë à la zone 54, et disposée près de la face latérale 43, est prévue pour recevoir la couronne 16 du fouet 15. Un bossage 57 est ménagé au milieu de la zone 56. Une nervure 58 est prévue pour recevoir l'une des pales 17 du fouet 15. Une deuxième empreinte 59 disposée entre la nervure 58 et le bossage 81 est prévu pour loger une autre branche 26 du pétrin 25. La nervure 83 est disposée entre la zone 54 et la zone 56.

Une conformation 60 concave ménagée entre la zone 54 et la face latérale 44 est prévue pour recevoir le corps 10 du moyeu 9. Une deuxième conformation 61 concave disposée entre la conformation 60 et la face avant 41 est prévue pour recevoir la base 13 du moyeu 9. La profondeur de la conformation 61 est supérieure à la profondeur de la conformation 60. Une troisième conformation 62 disposée entre la conformation 60 et la zone 51 est prévue pour loger partiellement la tête 14 du moyeu 9. La profondeur de la conformation 62 est inférieure à la profondeur de la conformation 60. La nervure 82 est formée par un rebord de la conformation 60. Une troisième empreinte 65, disposée entre la conformation 60 et la conformation 61, est prévue pour loger une troisième branche 26 du pétrin 25. A titre de variante, les conformations 60, 61, 62 peuvent être réalisées par une série de nervures et/ou de bossages formant une enveloppe concave prévue pour loger le moyeu 9. Egalement à titre de variante, le moyeu 9 peut être logé dans une seule conformation.

Entre la zone 56, la conformation 61 et la face avant 41 est ménagée une zone déprimée 63, plane, prévue pour loger la lame inférieure 31 et la couronne 33 du couteau 30 équipé de préférence du protège lames 34. La lame supérieure 32 du couteau 30 prend place dans une aire 64 entre la conformation 61 et la face avant 41. Une quatrième empreinte 66 disposée entre la zone 54 et la zone 63 est prévue pour loger la quatrième branche 26 du pétrin 25. Un bossage 85 est disposé entre la zone 56, la zone 63 et la paroi latérale 43. Le bossage 84 est disposé entre la zone 54, l'empreinte 66, la zone 63 et la conformation 61.

Tel que montré à la figure 3, la zone 51 comporte deux pictogrammes 70, 71 représentant les disques 20, 21. La conformation 60 présente un pictogramme 72 représentant le moyeu 9. Le bossage 55 présente un pictogramme 73 représentant le pétrin 73. Le bossage 57 présente un pictogramme 74 représentant le fouet 15. La zone plane 63 présente un pictogramme 75 représentant le couteau 30.

Le support de rangement d'accessoires formé par le fond 49 s'inscrit ainsi dans un plan. Les zones 51, 54, 56, 63 de réception permettent un rangement des outils de travail rotatifs 20, 21, 25, 15, 30, dans lequel l'axe de rotation desdits outils est perpendiculaire au plan du fond 49. Les conformations 60, 61, 62 permettent un rangement du moyeu 9 dans lequel l'axe de rotation dudit moyeu est parallèle au plan du fond. Le tiroir 3 comportant le fond 49 étant monté coulissant dans le logement 2 du boîtier 1 selon un plan horizontal, l'axe de rotation des outils 15, 20, 21, 25, 30 placés sur le support de rangement est disposé verticalement et l'axe de rotation du moyeu 9 placé sur le support de rangement est disposé horizontalement.

Le diamètre du moyeu 9 et la hauteur des outils 15, 20, 21, 25, 30 pouvant être limités plus facilement que la hauteur du moyeu et le diamètre ou la largeur des outils, cette disposition permet de réduire la hauteur du tiroir 3 comportant le fond 49 formant le support de rangement. Tel que bien visible aux figures le moyeu 9 est allongé selon son axe de rotation alors que les outils présentent une hauteur selon leur axe de rotation inférieure à la moitié de leur diamètre.

Tel que bien visible à la figure 3, la face avant 41, la face arrière arrondie 46, et les faces latérales 43, 44 forment les bords latéraux du support formé par le fond 49. Ainsi le bossage 81, la nervure 58, la zone 56, le bossage 85, la zone 63, l'aire 64, les conformations 60, 61, 62, et la zone 51 sont disposées près d'un bord latéral du support.

Le support de rangement d'accessoires formé par le fond 49 présente une forme allongée, tel que bien visible aux figures, la zone 51 prévue pour recevoir les outils de travail rotatif 20, 21 de la deuxième série s'étendant au moins partiellement dans une première moitié de la longueur du support, les autres zones 54, 56, 63 prévues pour recevoir un outil de travail rotatif 15, 25, 30 de la première série s'étendant au moins partiellement dans l'autre moitié de la longueur du support. A titre de variante le support pourrait être rallongé ou raccourci pour accueillir au moins un outil de plus ou de moins. Ainsi la largeur du support reste peu supérieure à la largeur maximale des outils.

Tel que montré à la figure 3 on remarquera que la zone 51 prévue pour recevoir les outils 20, 21 s'étend sur plus de 80% de la largeur maximale du support, définie en référence à la longueur maximale perpendiculaire du support, et que les zones 54 et 63 prolongées respectivement par deux empreintes diamétralement opposées 59, 65 et par une aire 64, s'étendent également sur plus de 80% de ladite largeur. A titre de variante, les zones pourraient être prolongées par d'autres conformations que les empreintes ou l'aire pour former un logement de réception d'outil.

Tel que représenté aux figures 1 et 2, l'espace de rangement formé par le tiroir 3 coulissant dans le logement 2 présente une hauteur bien inférieure au tiers de sa longueur.

A titre de variante, l'axe de rotation des outils disposés dans les zones de réception 51, 54, 56, 63 peut présenter par rapport à la normale au plan du fond un angle inférieur à 20°, et de préférence inférieur à 10°. A titre de variante également, l'axe de rotation du moyeu disposé dans les conformations 60, 61, 62 peut présenter par rapport au plan du fond un angle inférieur à 20°, et de préférence inférieur à 10°.

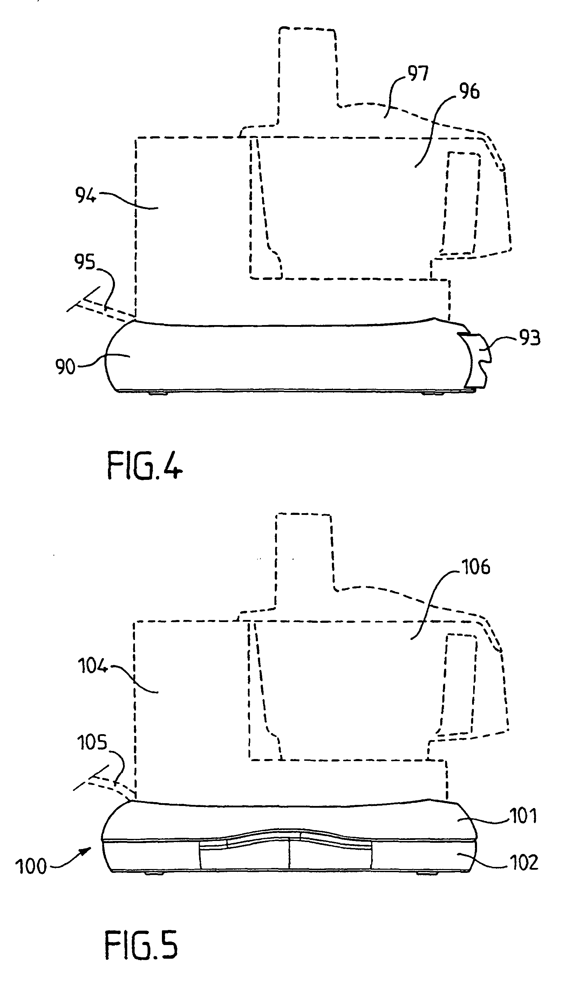

La figure 4 présente une variante de réalisation dans laquelle un tiroir 93 est monté dans un socle 90 prévu pour être disposé sous un appareil électroménager de préparation culinaire, comportant un boîtier moteur 94 et un récipient de travail 96 ainsi que des outils de travail rotatifs montés sur un moyeu amovible (non illustrés à la figure 4). Le tiroir 93 forme un support de rangement des outils de l'appareil selon les dispositions de l'invention, et correspond par exemple au tiroir de l'exemple de réalisation précédent. Dans l'exemple de réalisation illustré à la figure 4, le socle 90 comporte un logement de réception du tiroir 93 monté coulissant. Toutefois un tiroir monté pivotant est également envisageable. Le tiroir 93 peut être obtenu par moulage.

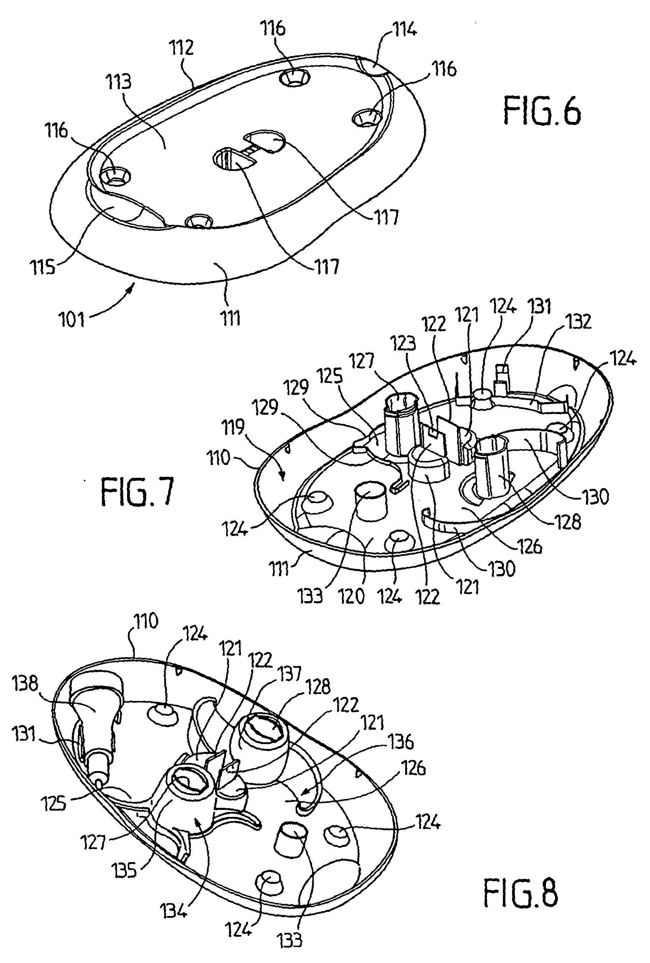

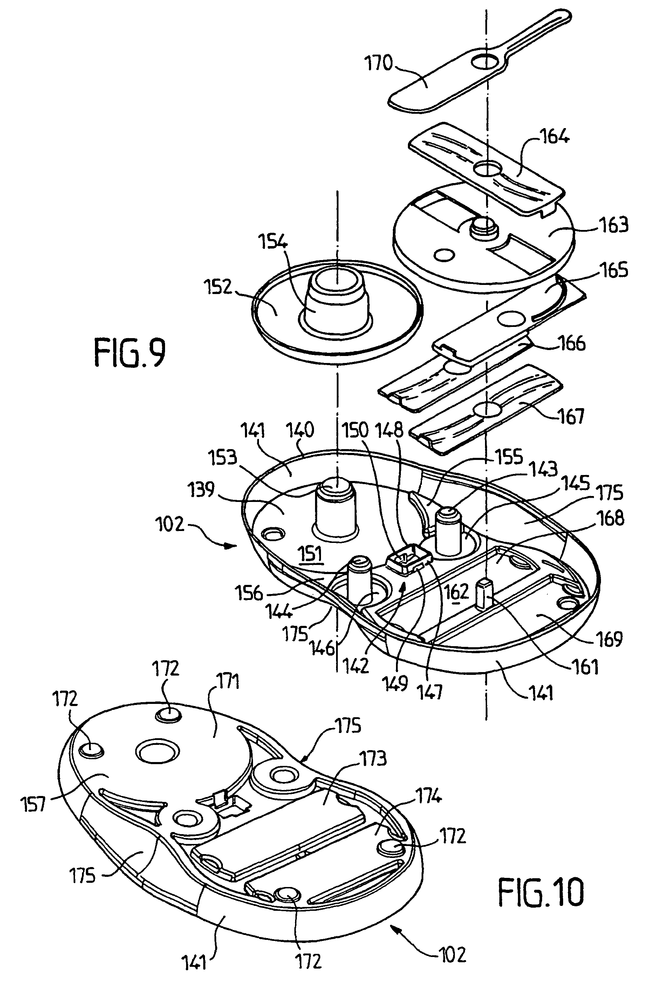

La figure 5 présente un autre exemple de réalisation d'un socle 100 comportant un support de rangement d'accessoires selon l'invention, prévu pour être disposé sous un appareil électroménager de préparation culinaire, comportant un boîtier moteur 104 et un récipient de travail 106 ainsi que des outils de travail rotatifs montés sur un moyeu amovible, visibles aux figures 8 et 9. Le socle 100 comprend un couvercle 101, formé par une demi-coque supérieure, et une base 102, formée par une demi-coque inférieure. La base 102 et le couvercle 101 forment une boîte de rangement définissant un espace de rangement pour les accessoires de travail rotatif. La base 102 et le couvercle 101 peuvent être obtenus par moulage.

Dans les exemples de réalisation illustrés aux figures 4 et 5, le récipient 96, 106 est disposé sur le boîtier moteur 94 , 104 alimenté par un cordon électrique 95, 105, et est fermé par un couvercle 97, 107. Un tel appareil comporte un entraînement en partie inférieure du récipient 96, 106, connu en soi et non représenté aux figures. Toutefois un appareil comportant un entraînement en partie supérieure du récipient peut également être utilisé avec le socle 90 ou le socle 100.

Le couvercle 101 représenté aux figures 6 à 8 comporte un bord périphérique inférieur 110 raccordé par une paroi latérale 111 à un rebord périphérique supérieur 112 entourant une face supérieure 113. Le couvercle 101 présente une forme allongée selon une direction longitudinale. Une encoche 114 ménagée dans le rebord supérieur 112 est prévue pour le passage du cordon électrique de l'appareil (représenté à la figure 5). Une autre encoche 115 ménagée dans le rebord supérieur 112 dans la moitié opposée du couvercle 101 est prévue pour le passage des doigts sous le boîtier de l'appareil, afin de faciliter le retrait de l'appareil du socle. Des dépressions 116 ménagées sur la face supérieure 113 forment des moyens de retenue prévus pour recevoir les moyens d'appui disposés sous l'appareil. A titre de variante, une seule dépression, par exemple non circulaire, pourrait être envisagée sur la face supérieure du socle, ou encore une ou plusieurs nervures prévues pour coopérer avec une face latérale de l'appareil de préparation culinaire ou avec une conformation de la face inférieure dudit appareil. Deux ouvertures 117 prévues pour le passage d'un doigt sont avantageusement ménagées sur la face 113, sensiblement au milieu de ladite face.

Tel que mieux visible à la figure 7, le couvercle 101 comporte une face intérieure 119 présentant un fond 120 duquel s'élèvent deux plots 121 correspondant aux ouvertures 117 visibles à la figure 6. Deux languettes 122 sont disposées face à face entre les plots 121. Les extrémités supérieures des faces des languettes 122 disposées du côté du plot le plus proche comportent un crochet 123. Les faces latérales des plots adjacentes aux languettes 122 sont évidées de manière à permettre un actionnement des languettes 122 par les ouvertures 117. Si désiré, les languettes 122 peuvent être associées à une lamelle métallique pour obtenir une meilleure élasticité. Le fond 120 comporte des bossages 124 correspondant aux dépressions 116 de la face supérieure.

Deux zones 125, 126 de réception d'outil sont disposées sur la face intérieure 119 de part et d'autre des plots 121 sensiblement selon une direction perpendiculaire à la direction longitudinale. Les zones 125, 126 entourent chacune un bossage 127, 128 et sont délimitées partiellement en périphérie par une ou plusieurs nervures 129, 130. Une conformation 131 et une nervure 132 sont agencées à proximité de la paroi latérale 111. Un plot 133 est disposé dans la moitié opposée de la face 120 par rapport à la conformation 131 et à la nervure 132.

La figure 8 montre un outil pétrin 134 à quatre branches logé dans la zone 125, un outil couteau 136 à deux lames logé dans la zone 126, et un moyeu 138, représenté schématiquement, maintenu par la conformation 131 selon un axe incliné d'environ 10° par rapport au plan du couvercle 101. La couronne 135 de l'outil pétrin est montée sur le bossage 127 et la couronne 137 de l'outil couteau est montée sur le bossage 128. Le moyeu 138 et l'outil 136 sont rangés le long d'un bord latéral du réservoir 101. Le couvercle 101 forme ainsi un support de rangement d'accessoires prévu pour recevoir un moyeu dont l'axe de rotation est disposé sensiblement dans le plan du support, et au moins un outil dont l'axe de rotation est disposé perpendiculairement au plan du support. A titre de variante, plusieurs conformations peuvent être envisagées pour recevoir le moyeu 138. La ou les conformations peuvent être issues d'une paroi latérale de la face intérieure 119, et non seulement du fond 120.

La base 102 représentée aux figures 9 et 10 comporte un bord périphérique supérieur 140 ajusté avec le bord 110 du couvercle 101. Le bord 140 est relié par une paroi latérale 141 à un fond 142. La base 102 est allongée par rapport à une direction principale. La base 102 comporte par rapport à cette direction principale des faces latérales présentant dans leur partie médiane un renfoncement 175. La base 102 comporte ainsi deux renfoncements 175 diamétralement opposés, formant des moyens de préhension permettant de soulever le socle. A titre de variante, d'autres moyens de préhension peuvent être envisagés.

Deux plots 143, 144 sont ménagés sur une face intérieure 139 de la base 102. Les plots 143, 144 s'étendent depuis le fond 142 et sont entourés chacun par une zone déprimée 145, 146 de la face intérieure 139, prévues respectivement pour loger les couronnes 135, 135 de l'outil pétrin et de l'outil couteau. Entre les plots 143, 144, des nervures 147, 148 comportent chacune une ouverture 149, 150 prévue pour recevoir les crochets 123 des languettes 122.

Une zone 151 de réception d'un outil émulsionneur 152 en forme de disque s'étend d'un côté des plots 143, 144. La zone 151 s'étend autour d'un plot 153 issu du fond 142. Le plot 153 est prévu pour recevoir une couronne axiale 154 de l'outil 152. La zone 151 est délimitée partiellement par la paroi latérale 141 présentant un arrondi épousant sensiblement la moitié de la circonférence de l'outil 152, et par des bossages 155, 156.

De l'autre côté des plots 143, 144 s'étend une zone 162 de réception d'un outil 163 en forme de disque comportant des cartouches amovibles 164, 165, 166, 167 prévues pour réalisées des préparations râpées ou émincées. Deux empreintes 168, 169 sont ménagées dans la zone 162 de part et d'autre d'un plot 161. L'une des cartouches peut être logée dans chacune des empreintes, les autres cartouches étant montées sur le plot 161 de même que l'outil 163. Le plot 161 peut également recevoir une spatule 170 comportant une découpe appropriée.

Le moyeu 138 est prévu pour recevoir dans sa partie inférieure des outils d'une première série tels que l'outil pétrin 134, l'outil couteau 136 ou l'outil émulsionneur 152 et dans sa partie supérieure des outils d'une deuxième série tels que l'outil disque 163.

La base 102 comporte ainsi deux paires de plots issues de la face intérieure 142, disposées selon la direction principale, respectivement la direction perpendiculaire, dans le tiers central, et selon la direction perpendiculaire, respectivement la direction principale, dans l'un et l'autre des tiers latéraux.

La base 102 présente une face inférieure 157 comportant des moyens d'appui 172, formés dans l'exemple illustré à la figure 10 par quatre pieds. La face inférieure 157 comporte des bossages 173, 174 correspondant aux empreintes 168,169. A titre de variante, d'autres moyens d'appui peuvent être envisagés, par exemple une surface antidérapante.

Le socle 100 peut être défini par une longueur maximale selon une direction dite principale, par une largeur maximale dans la direction perpendiculaire à ladite longueur, et par une hauteur. La hauteur du socle 100 est inférieure au tiers de la longueur maximale, et tel qu'illustré aux figures 5 à 10, est de l'ordre du quart de ladite longueur.

L'utilisateur peut solidariser la base 102 et le couvercle 101 par simple superposition. Les plots 143, 144 sont guidés dans les bossages 127, 128 présentant un sommet ouvert, et les crochets 123 des languettes 122 s'engagent dans les ouvertures 149, 150. Inversement, une pression sur les languettes 122 permet de dégager les crochets 123.

A titre de variante, au moins une conformation de réception d'un moyeu peut également être prévue sur la base 102, les zones de réception des outils étant réaménagées en conséquence.

Le rebord périphérique et les encoches ménagés sur la face supérieure du socle 100 peuvent également être envisagés sur le socle 90.

Les empreintes permettant de loger les cartouches amovibles du deuxième exemple de réalisation pourraient être utilisées dans le premier exemple de réalisation.

On remarquera que les outils de la première série présentés aux figures, prévus pour être montés dans la partie inférieure du moyeu, présentent une hauteur sur l'axe plus importante que les outils de la deuxième série, prévus pour être montés dans la partie supérieure du moyeu.

De nombreuses améliorations peuvent être apportées à ces supports, ces tiroirs, à ces espaces de rangement et à cet appareil dans le cadre des revendications.

## Revendications

1. Support de rangement d'accessoires d'appareil électroménager de préparation culinaire, comportant au moins une conformation (60, 61, 62) prévue pour recevoir un moyeu (9), et plusieurs zones (51, 54, 56, 63), prévues chacune pour loger en totalité ou en partie au moins un outil de essentiellement travail rotatif (15, 20, 21, 25, 30), où le support s'inscrit dans un plan horizontal, lesdits outils de travail rotatifs (15, 20, 21, 25, 30) étant prévus pour être montés de manière amovible sur le moyeu (9), au moins l'une des zones (54, 56, 63) étant prévue pour recevoir l'un des outils de travail rotatifs (15, 25, 30) appartenant à une première série prévue pour être montée sur une base (13) du moyeu (9), au moins une autre des zones (51) étant prévue pour recevoir l'un des outils de travail rotatifs (20, 21) appartenant à une deuxième série prévue pour être montée sur une tête (14) du moyeu (9), l'axe du moyeu (9) logé dans la ou les conformations (60, 61, 62) étant disposé sensiblement dans le plan du support, l'axe de chacun des outils de travail rotatifs (15, 20, 21, 25, 30) étant disposé sensiblement perpendiculairement au plan du support, les zones (51, 54, 56, 63) étant délimitée(s) au moins partiellement par des nervures (80, 82, 83) et par des bossages (55, 57, 81, 84, 85).

2. Support de rangement d'accessoires selon la revendication 1, **caractérisé en ce que** le support est formé par un fond (49) dans lequel la ou les zones (51, 54, 56, 63 ) et la ou les conformations (60, 61, 62) sont obtenues par moulage.

3. Support de rangement d'accessoires selon l'une des revendications 1 ou 2, **caractérisé en ce que** la ou au moins l'une (54, 56) des zones est annulaire et comporte en son centre un bossage (55, 57) présentant un pictogramme (73, 74) représentant l'outil (25, 15) correspondant.

4. Support de rangement d'accessoires selon l'une des revendications 1 à 3, **caractérisé en ce que** des empreintes (53, 59, 65, 66) sont ménagées dans la ou l'une des zones (51), ou entre deux zones (54, 63) ou conformations (60, 61).

5. Support de rangement d'accessoires selon l'une des revendications 1 à 4, **caractérisé en ce que** la ou l'une (51) des zones est sensiblement circulaire et comporte un axe (50) prévu pour recevoir au moins un outil (20, 21) en forme de disque.

6. Support de rangement d'accessoires selon l'une des revendications 1 à 5, **caractérisé en ce que** la ou les conformations (60, 61, 62) s'étendent entre un bord latéral du support et l'une (54) au moins des zones.

7. Tiroir comportant un support de rangement d'accessoires selon l'une des revendications 1 à 6, **caractérisé en ce qu'**il comporte une face arrière (46) reliée à des faces latérales (43, 44) par des arrondis (47, 48).

8. Tiroir selon la revendication 7, **caractérisé en ce que** les arrondis (47, 48) entourent une moitié d'une zone sensiblement circulaire (51) du support au milieu de laquelle est disposé un axe (50) prévu pour recevoir au moins un outil (20, 21) en forme de disque.

9. Appareil électroménager de préparation culinaire comportant un boîtier (1), un récipient de travail (6) dans lequel peut être monté un accessoire de travail rotatif couplé à une transmission entraînée par un moteur disposé dans le boîtier, le boîtier comportant dans sa partie inférieure un logement (2) de réception d'un tiroir (3), **caractérisé en ce qu'**il comporte des accessoires de travail rotatifs formés par des outils de travail rotatifs (15, 20, 21, 25, 30) montés de manière amovible sur un moyeu (9) amovible, et **en ce que** le tiroir (3) comporte un support de rangement d'accessoires selon l'une des revendications 1 à 6.

10. Appareil électroménager de préparation culinaire selon la revendication 9, **caractérisé en ce que** le tiroir (3) comporte une face arrière (46) reliée à des faces latérales (43, 44) par des arrondis (47, 48) et est monté coulissant dans le logement (2).

11. Appareil électroménager de préparation culinaire selon l'une des revendications 9 ou 10, **caractérisé en ce que** le logement (2) occupe au moins 70% de la surface de base du boîtier (1).

## Patentansprüche

1. Lagerungsträger für Zubehörteile eines Elektrohaushaltsgeräts zur Nahrungsmittelbereitung, der wenigstens eine zur Aufnahme einer Nabe (9) vorgesehene Ausbildung (60, 61, 62) und mehrere Zonen (51, 54, 56, 63) aufweist, die jeweils dazu vorgesehen sind, ganz oder wenigstens teilweise ein Dreharbeitswerkzeug (15, 20 21, 25, 30) unterzubringen, wo der Träger in einer im wesentlichen horizontalen Ebene liegt, wobei die Dreharbeitswerkzeuge (15, 20, 21, 25, 30) zum abnehmbaren Anbringen an der Nabe (9) vorgesehen sind, wobei wenigstens eine der Zonen (54, 56, 63) zur Aufnahme eines der Dreharbeitswerkzeuge (15, 25, 30) vorgesehen ist, welche zu einer ersten Serie gehören, die zum Anbringen an einer Basis (13) der Nabe (9) vorgesehen ist, wobei wenigstens eine andere der Zonen (51) zur Aufnahme eines der Dreharbeitswerkzeuge (20, 21) vorgesehen ist, welche zu einer zweiten Serie gehören, die zum Anbringen an einem Kopf (14) der Nabe (9) vorgesehen ist, wobei die Achse der in der oder den Ausbildung(en) (60, 61, 62) untergebrachten Nabe (9) im wesentlichen in der Ebene des Trägers angeordnet ist, wobei die Achse jedes der Dreharbeitswerkzeuge (15, 20, 21, 25, 30) im wesentlichen senkrecht zu der Ebene des Trägers angeordnet ist, wobei die Zone(n) (51, 54; 56, 63) wenigstens teilweise durch Rippen (80, 82, 83) und durch Buckel (55, 57, 81, 84, 85) abgegrenzt ist (sind).

2. Lagerungsträger für Zubehörteile nach Anspruch 1, **dadurch gekennzeichnet, daß** der Träger durch einen Boden (49) gebildet ist, in welchem die Zone(n) (51, 54, 56, 63) und die Ausbildung(en) (60, 61, 62) durch Formung erhalten ist (sind).

3. Lagerungsträger für Zubehörteile nach einem der Ansprüche 1 oder 2, **dadurch gekennzeichnet, daß** die oder wenigstens eine der Zonen (54, 56) ringförmig ist und in ihrem Zentrum einen Buckel (55, 57) mit einem Piktogramm (73, 74) aufweist, welches das entsprechende Werkzeug (25, 15) darstellt.

4. Lagerungsträger für Zubehörteile nach einem der Ansprüche 1 bis 3, **dadurch gekennzeichnet, daß** Prägungen (53, 59, 65, 66) in der oder einer der Zonen (51) oder zwischen zwei Zonen (54, 63) oder Ausbildungen (60, 61) vorgesehen sind.

5. Lagerungsträger nach einem der Ansprüche 1 bis 4, **dadurch gekennzeichnet, daß** die oder eine der Zonen (51) im wesentlichen kreisförmig ist und eine Achse (50) aufweist, die zur Aufnahme wenigstens eines scheibenförmigen Werkzeugs (20, 21) aufweist.

6. Lagerungsträger nach einem der Ansprüche 1 bis 5, **dadurch gekennzeichnet, daß** sich die Ausbildung(en) (60, 61, 62) zwischen einem seitlichen Rand des Trägers und wenigstens einer der Zonen (54) erstrecken.

7. Schubfach mit einem Lagerungsträger nach einem der Ansprüche 1 bis 6, **dadurch gekennzeichnet, daß** es eine hintere Seite (46) aufweist, die mit lateralen Seiten (43, 44) durch Abrundungen (47, 48) verbunden sind.

8. Schubfach nach Anspruch 7, **dadurch gekennzeichnet, daß** die Abrundungen (47, 48) eine Hälfte einer im wesentlichen kreisförmigen Zone (51) des Trägers umgeben, in deren Mitte eine Achse (50) angeordnet ist, welche zur Aufnahme wenigstens eines scheibenförmigen Werkzeugs (20, 21) vorgesehen ist.

9. Elektrohaushaltsgerät zur Nahrungsmittelvorbereitung mit einem Gehäuse (1), einem Arbeitsbehälter (6), in welchem ein Dreharbeitszubehör angebracht werden kann, das mit einem Getriebe gekoppelt ist, welches von einem in dem Gehäuse angeordneten Motor angetrieben wird, wobei das Gehäuse in seinem unteren Teil einen Sitz (2) zur Aufnahme eines Schubfachs (3) aufweist, **dadurch gekennzeichnet, daß** es Dreharbeitszubehörteile aufweist, die durch Dreharbeitswerkzeuge (15, 20, 21, 25, 30) gebildet sind, welche auf abnehmbare Weise an einer abnehmbaren Nabe (9) angebracht sind, und daß das Schubfach (3) einen Lagerungsträger für Zubehörteile nach einem der Ansprüche 1 bis 6 aufweist.

10. Elektrohausgehaltsgerät zur Nahrungsmittelvorbereitung nach Anspruch 9, **dadurch gekennzeichnet, daß** das Schubfach (3) eine hintere Seite (46) aufweist, die mit lateralen Seiten (43, 44) durch Abrundungen (47, 48) verbunden ist, und in dem Sitz (2) gleitend angebracht ist.

11. Elektrohaushaltsgerät zur Nahrungsmittelvorbereitung nach einem der Ansprüche 9 oder 10, **dadurch gekennzeichnet, daß** der Sitz (2) wenigstens 70 % der Basisoberfläche des Gehäuses (1) einnimmt.

## Claims

1. A support for storing accessories of a domestic electrical appliance for preparing food, the support comprising at least one shape (60, 61, 62) designed to receive a hub (9), and a plurality of zones (51, 54, 56, 63), each provided for housing all or part of at least one rotary working tool (15, 20, 21, 25, 30), in which the support is inscribed in an essentially horizontal plane, said rotary working tools (15, 20, 21, 25, 30) being designed to be removably mounted on the hub (9), at least one of the zones (54, 56, 63) being designed to receive one of the rotary working tools (15, 25, 30) belonging to a first series for mounting on a base (13) of the hub (9), at least one other one of the zones (51) being designed to receive one of the rotary working tools (20, 21) belonging to a second series designed to the mounted on a head (14) of the hub (9), the axis of the hub (9) housed in the shape(s) (60, 61, 62) being disposed substantially in the plane of the support, the axis of each of the rotary working tools (15, 20, 21, 25, 30) being disposed substantially perpendicularly to the plane of the support, the zones (51, 54, 56, 63) being defined at least in part by ribs (80, 82, 83) and by projections (55, 57, 81, 84, 85).

2. A support for storing accessories according to claim 1, **characterized in that** the support is formed by a bottom (49) in which the zones(s) (51, 54, 56, 63) and the shape(s) (60, 61, 62) are obtained by molding.

3. A support for storing accessories according to claim 1 or claim 2, **characterized in that** the or at least one of the zones (54, 56) is annular and includes in its center a projection (55, 57) presenting a pictogram (73, 74) representing the corresponding tool (25, 15).

4. A support for storing accessories according to any one of claims 1 to 3, **characterized in that** indentations (53, 59, 65, 66) are formed in the or one of the zones (51), or between two zones (54, 63) or two shapes (60, 61).

5. A support for storing accessories according to any one of claims 1 to 4, **characterized in that** the or one of the zones (51) is substantially circular and has an axis (50) designed to receive at least one tool (20, 21) in the form of a disk.

6. A support for storing accessories according to any one of claims 1 to 5, **characterized in that** the shape(s) (60, 61, 62) extends between a side edge of the support and at least one of the zones (54).

7. A drawer including a support for storing accessories according to any one of claims 1 to 6, **characterized in that** it includes a rear face (46) connected to side faces (43, 44) by rounded portions (47, 48).

8. A drawer according to claim 7, **characterized in that** the rounded portions (47, 48) surround half of a substantially circular zone (51) of the support having a shaft (50) provided in the middle thereof for receiving at least one tool (20, 21) in the form of a disk.

9. A domestic electrical appliance for preparing food, the appliance comprising a case (1), a working receptacle (6) in which there can be mounted a rotary working tool coupled to a transmission driven by a motor disposed in the case, the case including in its bottom portion a housing (2) for receiving a drawer (3), the appliance being **characterized in that** it includes rotary working accessories formed by rotary working tools (15, 20, 21, 25, 30) removably mounted on a removable hub (9), and **in that** the drawer (3) includes a support for storing accessories in accordance with any one of claims 1 to 6.

10. A domestic electrical appliance for preparing food according to claim 9, **characterized in that** the drawer (3) has a rear face (46) connected to side faces (43, 44) by rounded portions (47, 48) and is slidably mounted in the housing (2).

11. A domestic electrical appliance for preparing food according to claim 9 or claim 10, **characterized in that** the housing (2) occupies at least 70% of the surface area of the base of the case (1).
